# EUROPEAN PATENT SPECIFICATION

(11) **EP 0 567 615 B1**
(45) Date of publication and mention of the grant of the patent: **23.07.1997**
(21) Application number: 92922604.1
(22) Date of filing: 20.10.1992
(51) Int. Cl.: D04H 1/60, C08J 5/04

(54) **METHOD FOR MAKING PREFORMS**
VERFAHREN ZUM HERSTELLEN VON VORFORMEN
FABRICATION D'EBAUCHES

(30) Priority: 21.10.1991 US 781051
(43) Date of publication of application: 03.11.1993
(73) Proprietor: THE DOW CHEMICAL COMPANY, Midland, Michigan 48640 (US)
(72) Inventor: BARRON, James, H., Brazoria, TX 77422 (US); ENTRINGER, James, Angleton, TX 77515 (US); MOORE, Randy, S., Lake Jackson, TX 77566 (US)
(74) Representative: Huber, Bernhard, Dipl.-Chem.
(86) International application number: US9208947
(87) International publication number: WO9308322

(56) References cited:
- US-A- 4 869 950
- DATABASE WPI Derwent Publications Ltd., London, GB; AN 7937685B(20) & JP-A-54043262 (Nippon Steel Chem. KK) 5 April 1979
- DATABASE WPIL Derwent Publications Ltd., London, GB; AN 86229623(35) & JP-A-61160464 (Asahi Fiber Glass KK) 21 July 1986
- DATABASE WPIL Derwent Publications Ltd., London, GB; AN 89104908(14) & JP-A-1052806 (Kanai H.) 28 February 1989
- DATABASE WPIL Derwent Publications Ltd., London, GB; AN 85149869(25) & JP-A-60082344 (Kuraray KK) 10 May 1985

## Description

This invention relates to a method of making a preform suitable for use in making reinforced thermoplastic or thermoset composites.

There is an increasing need for high strength polymeric materials to replace metals in many applications. The polymeric materials have the advantage of lower weight and are often less expensive and more durable than metals. Usually, however, the polymeric material is much lower in strength than the metal, and unless it is reinforced in some manner it will not meet the strength requirements for metal replacement.

Thus, polymeric composites have been developed to meet these strength requirements. These composites are characterized by having a continuous polymeric matrix in which is embedded a reinforcement, usually a relatively rigid, high aspect ratio material such as glass fibers.

These composites usually are molded into a predetermined shape. In order to get the reinforcement into the composite, it is usually placed into the mold in a first step, followed by closing the mold and introducing a fluid molding resin into the mold. The molding resin fills the mold, including the interstices between the fibers, and hardens (by cooling or curing) to form the desired composite.

The reinforcement must be uniformly distributed throughout the composite or the composite will have weak spots where the reinforcement is missing. Thus, the reinforcement must be prepared so the individual fibers are distributed evenly throughout the composite. In addition, the individual fibers must resist flowing with the molding resin as it enters the mold.

For these reasons, the reinforcement is typically formed into a mat outside of the mold, and the preformed mat is placed in the mold in order to make the composite. The mat is generally prepared by forming the reinforcing fibers into a shape matching the inside of the mold and applying a binder to the fibers. In some instances a thermosetting binder is preapplied, and then cured after the fibers are shaped into a mat. In other methods, a thermoplastic binder is applied, so that in a subsequent operation the binder can be heated and softened and the mat shaped. This binder "glues" the individual fibers to each other so that the resulting mat retains its shape when it is transferred to the mold. The binder also helps the individual fibers retain their position when the fluid molding resin is introduced into the mold.

The binders used heretofore have been primarily of two types. The predominately used binders have been solvent-borne polymers such as epoxy resins. In addition, powdered binders have also been used. The conventional use of each of these types of binders has significant drawbacks. The solvent-borne binders are usually sprayed onto the mat, and then the mat is heated to volatilize the solvent and if necessary cure the binder. Thus, the application of binder is at least a two-step process. Moreover, it involves the use of solvents, which raises environmental, exposure and recovery issues, adding to the expense of the process. The process is also energy intensive, as the entire mat must be heated just to flash off solvent and cure the binder. The curing step also makes the process take longer. In the preferred air directed method using this type of binder, "lofting ", or inadequate compaction of the preform, occurs. This causes the formation of a lower density preform than desired, density gradients throughout the preform, and poor adhesion of the individual fibers to the others. Finally, because the binder is a low viscosity fluid, it tends to flow over and coat a large portion of the surface of the fibers. When a composite is prepared using the preform, the binder often interferes with the adhesion between the fiber and the continuous polymer phase.

US-A-4,869,950 discloses a dry process wherein fibers are blended with a vinylidene chloride interpolymer powder, subsequently shaped to the desired form, followed by heating up to a temperature above the melting point of the polymer in order to effect at least partial melting and cooling to resolidify the interpolymer thereby causing adherence to the fibers. A dry powder material is contacted with the fibers in an initial step of the method, the adherence of the binder being effected in a subsequent process step. Thus, the method is unsuitable for a variety of applications, e.g. air-directed methods. Further, the method of US-A-4,869,950 requires two separate process steps, i.e. blending and subsequent heating of the entire binder/fiber material. There is no teaching as to directly applying a partially melted tacky binder.

The powdered binders cannot be applied to a screen in an air directed method, unless a veil is first applied to the screen to prevent the binder particles from being sucked through. This of course adds to the overall cost and imposes an additional step on the process. Airborne powders also present a health and explosion hazard. Further, the use of powdered binders requires a heating step to melt the binder particles after they are applied to the fibers, which renders this process energy intensive as well.

JP-A-54043262 discloses the manufacture of a composite material comprising a fibrous layer and a second layer consisting of glass fiber, Kraft paper or film, the layers being adhered to one another by an intermediary layer of hot-melt adhesive. To this end, the fiber layer is sprayed with hot-melt adhesive to form an adhesive layer, and coated with the surface-converting layer. JP-A-54043262 thus relates to a completely different technical field than the present invention, namely to bonding layers of different materials by means of an intermediary adhesive layer.

Thus, it would be desirable to provide a simpler method for making preforms in which the problems associated with using solvent-borne or powdered binders are minimized or overcome.

In one aspect, this invention is a method for applying a binder to a fiber mat, comprising
(a) applying a plurality of particles of an at least partially melted tacky binder material onto a fiber mat, which material is solid at 25°C, said particle being used in an amount from 0.25 to 20 parts per 100 parts by weight fiber mat and then
(b) cooling said binder material to a temperature at which it is solid such that the particles adhere to the fibers in the mat and bind said fibers together to form a dimensionally stable preform.

In another aspect, this invention is a method for applying a binder to a fiber mat, comprising
(a) spraying a plurality of particles of a material which is a solid at 25°C through an energy source such that the particles are at least partially melted so as to become tacky,
(b) contacting said at least partially melted particles with a fiber mat said particle being used in an amount from 0.25 to 20 parts per 100 parts by weight fiber mat and then
(c) cooling said particles to a temperature at which they are solid such that the particles adhere to the fibers in the mat and bind said fibers together to form a dimensionally stable preform.

In a third aspect, this invention is a method for making a preform, comprising
(a) applying a plurality of short reinforcing fibers to a screen to form a shaped mat
(b) spraying a plurality of particles of an at least partially tacky binder material such that said particles come into contact with said mat, which material is a solid at 25°C, then, while maintaining said fibers in position on the screen,
(c) cooling said binder material to a temperature at which it is solid, whereby the binder material adheres to the fibers in the mat and binds said fibers together to make a dimensionally stable preform, and then
(d) removing the resulting preform from the screen.

This method provides for a simplified, effective method for making preforms. Because the binder material is a true solid or supercooled liquid at 25°C, volatile organics such as solvents are not present in significant amounts, and the problems associated with them are avoided. The preform does not have to be heated after application of the binder to remove solvent or cure the binder, and so a process step is saved and energy requirements are reduced. Since the binder is applied in a finely divided state, the cooling step is usually almost instantaneous, so the process is fast. In addition, the fibers in the mat are often compacted during this process, thereby providing a higher density preform, which in turn provides a way to obtain higher fiber loadings in a composite material made from the preform. Since the binder cools rapidly it immediately holds the fibers in place and thus overcomes the lofting problem associated with solvent-borne and powdered binders. For this same reason, the binder particles do not spread much from their point of impact on the fibers. Thus, the surface area of the fibers which is covered with binder is substantially reduced compared to when the solvent-borne binders are used. This maximizes the available surface area of the fibers available for direct interface with the molding resin when a composite is made, and therefore enables a greater interfacial bond strength to be obtained.

In this process, a normally solid binder material is applied to a mat of reinforcing fibers as a plurality of at least partially melted, tacky particles. The particles then cool in contact with the fibers of the mat, gluing them together to make a preform. As used herein, the term "mat" refers to a collection of intersecting fibers to which no binder is applied. The term "preform" " refers to a collection of intersecting fibers to which a binder has been applied. The preform may or may not be shaped to a particular configuration for making a particular molded composite.

The binder material is a solid at 25°C. The term "solid" is used herein to include true solids as well as supercooled materials such as glass. Similarly, the terms "melt" or "molten" are used broadly herein to describe true melting as well as the heating of a supercooled liquid to a fluid state. The binder must be capable of melting so that it can be applied to the mat without significant decomposition. Further, it must be such that it adheres to the fibers of the mat upon cooling, forming a preform capable of maintaining its shape upon further handling. It is also preferably of a composition such that it does not significantly degrade under the temperature conditions encountered during preform preparation or subsequent molding operations.

Accordingly, the binder can be of a wide variety of compositions. Noncellular or cellular polymers which melt or soften without substantial decomposition are useful. Ceramic materials such as glass can also be used, as well as metals, especially low-melting metals. The selection of the composition of the binder may depend somewhat on whether any special properties are desired in the preform, as described below.

It is generally preferred to use an organic polymer as the binder material. A wide variety of organic polymers can be used, provided they meet the requirements set out before. Those having a melting point or T_{g} from 40, preferably 45 to 220, preferably to 180, more preferably to 150°C are of particular interest. Thermoplastic polymers are preferred, since those polymers melt easily without significant decomposition and solidify to adhere to the binder. However, thermoset polymers which can soften to become tacky upon heating can also be used herein. Among the thermoplastic resins useful herein are vinyl polymers and copolymers, including homopolymers and interpolymers of ethylene, propylene, and styrene, conjugated dienes such as butadiene, acrylics such as alkyl acrylates, acrylamide, acrylonitrile, alkyl methacrylates, hydroxy-alkylacrylates or methacrylates, vinyl halides like vinylchloride, vinylidene halides such as vinylidene chloride. Other types of thermoplastic polymers, including polyamines, polyesters, polycarbonates, thermoplastic polyurethanes and linear epoxy resins are also useful. A preferred organic polymer is an epoxy resin, particularly a substantially linear solid epoxy resin, especially a diglycidyl ether of a bisphenol. Suitable such epoxy resins include those described in U. S. Patent No. 4,992,228. Normally the polymeric binders are non-cellular, but cellular polymers as well as expandable polymers can also be used. In order to optimize adhesion of the molding resin to the preform when the composite is prepared, it is desirable to use a binder material which is compatible with the molding resin.

In addition to the preferred organic polymer binders, materials such as glass and other ceramic materials, metals (particularly low melting metals and alloys) and waxes can be used as the binder. Metal binders are of particular interest when it is desired to prepare a conductive preform. The ceramics and metals preferably have a melting point (or T_{g}, as the case may be) of less than about 700°C, preferably 100 to 500°C. This melting point range is preferred as, at those temperatures, the particles are melted easily and quickly cool to resume a solid state.

The binder normally and preferably contains no more than a small amount of volatile organic materials, so as not to require a drying step after application, and to avoid the environmental and health risks associated with the presence of volatile organics. A volatile organics content of 5 percent or less by weight, preferably 2 percent or less by weight is thus desired. In particular, it is preferred that any organic polymer used as a binder be substantially free of solvent and most preferred that an essentially 100 percent solids organic polymer be used.

The binder is in the form of a particulate. The term particulate is used herein to refer not only to generally solid low aspect ratio (about 3 or less) particles, but also to short fibers, hollow structures such as glass microbubbles or polymer foam particles. The size of the particles is not especially critical, although their particle size as well as their particular composition do effect melting rate, which in turn affects the amount of heating needed. For low aspect ratio materials, particles of 60 to 2000 µm (10 to 250 mesh) (U.S. Standard) are generally useful, with those of 150 to 300 µm (50 to 100 mesh) particularly useful. For high aspect ratio (greater than 3) binders, diameters of from 1, preferably from 10 to 500 µm (10 to 500 microns), preferably at about 100 µm (100 microns), more preferably to 30 µm (30 microns) are generally of interest. In this process, the binder material is melted and sprayed onto a fiber mat, on which it cools and adheres the individual fibers of the mat together.

The mat is composed of a fibrous reinforcing material. For the purposes of this invention, a fiber is a material having an aspect ratio of at least about 5, preferably at least about 10 and a length of at least about 0.254 cm (0.1 inch), preferably at least about 0.635 cm (0.25 inch). The fiber can be continuous, but preferably consists of chopped fibers having an average length of up to about 45.72 cm (18 inches), preferably up to about 25.4 cm (10 inches), more preferably up to about 10.16 cm (4 inches). Fiber diameters in the range from 1 to 1000 µm (1 to 1000 microns) are generally useful. The fiber may be monofilament, multistrand, woven or non-woven. Fiber rovings are also useful. The fibers can be of varying composition, provided that they do not melt as a composite is made therewith, and in general are chosen so that the fibers are stiffer (have a higher flexural modulus) than the molding resin used in the composite. Thus, high flexural modulus organic polymers such as polyamides, polyimides and aramids, metals, glass and other ceramics, carbon fibers and graphite fibers are suitable fiber materials. Glass fibers, including E glass and S glass, are preferred in many instances because of cost, availability and excellent reinforcing properties.

The fibers are formed into a mat using any convenient method. For example, continuous fibers can be woven to form a mat. In this method, the mat can be shaped for insertion into a mold prior to applying the binder. Alternatively, the binder can be applied to the woven mat, and the resulting preform heated and shaped in subsequent operations. In the latter case, a thermoplastic binder is especially useful.

In a similar manner, a mat can be made by forming a continuous fiber into loops. This type of mat can be shaped for insertion into a mold before or after applying the binder. As with the woven mats, it is highly preferred to use a thermoplastic binder for this type of mat, for the same reasons.

A third method is an air directed method in which chopped fibers are blown onto a shaped screen. The screen is normally shaped to match the contours of the mold. Air is drawn through the screen to hold the fibers in place until the binder is applied and cooled. This process is described more fully by Carley et al., "Preforming for Liquid Composite Molding," 44th Annual Conference, Composites Institute, The Society of the Plastics Industry, Inc., February 6-9, 1989.

The dimensions of the mat are not particularly critical as long as sufficient binder can be applied to the mat to give the resulting preform enough mechanical integrity to be transferred to a mold and used to make a composite. Mat thicknesses of up to 2.54 cm (1 inch), preferably up to 1.27 cm (0.5 inch), more preferably 0.32 to 1.02 cm (0.125 to 0.4 inch), are typically suitable. Of course, the mat thickness will depend on the particular part to be made therewith. Mat weights of 0.1 to 10 kg/m² can be prepared in this method, with weights from 0.5 to 6 kg/m² being typical. It is an advantage of this invention that higher density preforms (4 to 10 kg/m²) can be prepared easily.

The binder is applied as a plurality of at least partially melted tacky particles. Methods for applying the particles fall into two general classes. The preferred method involves forming a particulate solid binder material, and then spraying the binder particles through a heat source, and then onto the mat. The heat source is such that the binder material is at least partially melted, as discussed before. The preferred heat source is a flame, but other heat sources such as microwave or infrared radiation or a convection oven may also be useful. Most preferably, a flame spray apparatus such as that sold under the trade name Uni-Spray-Jet by UTP Welding Materials, Inc. is used to propel solid particles through a flame source and tnen onto the mat.

In another method, a bulk binder material is exposed to a heat source such as a flame, so that a portion thereof melts. A gas stream is then blown across the molten binder, causing particles of the molten material to be borne from the heat source onto the mat. This process is particularly useful for higher melting binder materials, such as glass or metals, although it can be used with polymeric binders as well. This process has the advantage of using a binder in bulk form, thus eliminating the need for a particulate starting material.

Sufficient binder is applied so that the fibers of the mat are glued together enough that the resulting preform maintains its physical integrity upon subsequent handling and molding operations. In general, from 0.25, preferably from 1.0, more preferably from 2.0 to 20, preferably to 10 parts by weight binder are used per 100 parts by weight mat.

In the air directed method, the steps of mat formation and binder application may be done sequentially. However, it is possible to perform these steps simultaneously in an air directed method. Thus, the fibers and binder can be simultaneously applied to a screen to form a preform in a single step. This is particularly useful in preparing thicker preforms, as it enables the binder to be more evenly distributed through the fibers in the mat. Thicker preforms can also be prepared in an air directed method by applications of thin layers of fiber alternated with applications of binder. Thus, the steps of applying the fibers to a screen, and then applying the binder material can be carried out at least twice, each time increasing the thickness of the preform.

The mat formation and binder application steps are also normally done sequentially when woven or looped mats are used.

Once the binder particles are applied to the mat, they are cooled to a temperature at which they become solid (i.e. are cooled to a temperature below their melting point or T_{g}). Usually, the mat acts as a heat sink, quickly removing heat from the binder particles. Thus, it is preferred that the mat be at a temperature below the melting point (or T_{g}) of the binder metal. In the air directed method, the air flow through the mat also contributes to cooling. As mentioned before, this cooling often occurs almost instantaneously, so that the preform is ready for subsequent handling and use almost immediately. If necessary, additional cooling can be implemented, but it is normally unnecessary and thus preferably avoided.

This process has the potential advantage of permitting the use of a much wider variety of binders than previous processes. It works quite well with non-cellular polymeric binders, thus providing a faster and more economical method of making a preform. In addition, this process permits the use of materials which previously were not considered for use as binders. Glass and metals, for example can be used, thereby eliminating any organic polymer from the preform. The use of metals permits the preparation of conductive preforms. Foamed polymer particles or expandable thermoplastic beads can also be used as the binder. This permits the preparation of a preform bound with a low density material, which preform can then be used to make a composite having a reduced internal density, as is desired in forming lightweight structural parts.

Another advantage this process provides, when the air directed method is used, is that it permits one to prepare a large preform in several smaller sections. In conventional air directed methods, a high powered fan or blower was needed, since the fibers and binder had to be applied to the entire screen, and the entire arrangement had to be maintained in place through the heating step, until the binder was cured. Because in this invention the binder immediately glues the individual fibers in place, the fibers can be applied to a small section of the screen, and will remain in place while fibers and binder are applied to subsequent sections. In this manner, very small blowers or fans are needed, and thus the capital requirements and energy consumption of the air directed method are improved.

As another alternative, a non-melting filler material may be sprayed onto the mat before or simultaneously with the binder material. It may also be applied in an intermediate step such that the resulting preform has a "core" rich in such non-melting filler material sandwiched between outer binder layers. Such fillers include thermosetting polymers, inorganic fillers such as titanium dioxide, kaolin, woll astonite, mica, calcium carbonate and aluminum trihydrate. The organic polymer filler can be of several types, but recycled polyurethane scrap is of particular interest. By applying a filler in this manner, the filler can be applied evenly to the mat and bound to the mat by the binder material, thus reducing or eliminating altogether the problem of the filler particles falling out of the preform during handling, or being washed out when the resin is injected during composite formation.

Other modifications to the preform can be made as needed. For example, spot reinforcement, such as, for example, with a woven or non-woven support material, can be incorporated into the preform prior to or after the application of the binder, in order to provide areas of extra reinforcement. Directionally oriented reinforcing fibers can also be used for additional strength and reinforcement.

The resulting preform is useful in preparing composites. These processes generally involve shaping the preform to match the contours of a mold (if such is not already done as the preform is made), placing the shaped preform into a mold, injecting an uncured or melted molding resin into the mold, and then curing or cooling the molding resin as needed to form a solid molded polymer. Of particular interest are the so-called resin transfer molding (RTM) and structural reaction injection molding (SRIM) processes. Such processes are described, for example, by Vaccarella, "RTM: A Proven Molding Process", Section 24-A, Proceedings of the 38th Annual Conference, Society of the Plastics Industry, 1985, p. 1-8, and in U. S. Patent Nos. 4,810,444 and 4,863,994. Although thermoplastic polymers can be used for this purpose, they usually have melt viscosities that are too high for easy processing. The high viscosity of the thermoplastic polymers often causes them to flow very poorly around the fibers in the preform, causing the formation of void spaces or in some instances destruction of the preform. In addition, some thermoplastics which chemically debond at high temperatures should also be avoided. Thus, it is preferred to use an uncured thermoset resin, which can be injected as low viscosity liquid into the mold and then cured. Suitable thermosetting resins include epoxy resins, polyurethanes, vinyl ester resins, unsaturated polyesters and phenolic resins. Most preferred are the epoxy resins, vinyl ester resins, unsaturated polyesters and polyurethanes

The most suitable epoxy resins are liquid at room temperature and are cured with a liquid reactant such as a polyamine. Particularly suitable epoxy resins include polyglycidyl ethers of polyhydric phenols such as, for example, diglycidyl ethers of biphenol, bisphenols, hydrocarbyl substituted biphenol and bisphenols, phenol or hydrocarbyl substituted bisphenol-aldehyde novolac resins, unsaturated hydrocarbon-phenol or hydrocarbyl substituted phenol resins and combinations thereof. Most particularly suitable are glycidyl ethers of bisphenol A having an epoxide equivalent weight from 350 to 2000, more preferably 600 to 1000.

Suitable vinyl ester and polyesters include those described in U. S. Patent No. 4,992,228. Suitable vinyl ester resins include, for example, the acrylate or methacrylates of polyglycidyl ethers of compounds having an average of more than one phenolic hydroxyl group per molecule. Most particularly suitable are the 500 to 2000 molecular weight reaction products of the glycidyl ether of bisphenol A and acrylic or methacrylic acid. Particular suitable unsaturated polyester resins include, for example, the reaction products of an unsaturated diacid such as fumaric acid with an alkoxylated bisphenol, such as a propoxylated or ethoxylated bisphenol A.

Suitable polyurethane resins include those described in U. S. Patent No. 4,810,444 and 4,863,994. Preferred polyurethanes are reaction products of a polyisocyanate and an active hydrogen-containing composition. The preferred polyisocyanates are toluene diisocyanate, diphenylmethanediisocyanate and derivatives of MDI such as polymeric MDI and prepolymers made from MDI. The active hydrogen-containing composition generally comprises one or more compounds having an average of two or more isocyanate-reactive groups per molecule and equivalent weights in the range from 31 to 3000. Preferably, a monofunctional material is also included in the active hydrogen-containing composition, as described in U. S. Patent No. 4,863,994. The active hydrogen-containing composition may further contain additives such as catalysts, colorants, surfactants and blowing agents.

The resulting composite is useful for a wide variety of uses, such as automobile bumpers, spare tire covers, computer housings, and in other structural applications.

The following examples are given to illustrate the invention and should not be interpreted as limiting it in any way. Unless stated otherwise, all parts and percentages are given by weight.

### Example 1

A glass fiber roving sold by Certainteed Corporation as Certainteed 227 roving was dispensed onto a 457 mm² screen having 3.2 mm diameter holes located on a 4.8 mm triangular pitch. The fibers were chopped into 32 mm lengths and blown onto the screen using a commercial chopper gun. A blower located on the reverse side of the screen pulls air through the screen to hold the fibers in place

To the glass fibers was applied a molten thermoplastic epoxy resin. This resin was a diglycidyl ether of bisphenol A having a melting point of 55°C to 60°C and an epoxide equivalent weight of 675 to 750. The resin was applied by first grinding it to a particle size of 150 to 300 µm (a mesh size of 50 to 100 (U.S.Standard)).

The resulting particulate was placed into the reservoir of a UTP Uni-Spray-Jet 71000 flame spray gun and sprayed through a propane/oxygen flame onto the fibers. The fibers of the preform were compressed by the force of the binder spray. The binder resolidified immediately upon contact with the fiber mat. The resulting preform had a density of 3.3 kg/m² and contained 9.6 percent binder (as measured by a glass burnout test). The thickness was 7 mm.

In a second experiment, a 9 mm thick preform weighing 5.1 kg/m² and containing 8.2 percent by weight binder was prepared in a similar manner. This preform was much more compact than conventional air directed fiber preforms, which were limited to a maximum density of about 3.6 kg/m².

### Example 2

A continuous glass roving (Rovcloth 3654, sold by Fiber glass Industries) was placed on a horizontal surface in the form of a woven mat. About 3 percent by weight of a binder was applied in the same manner as in Example 1. The resulting preform was stiff, and can be easily formed into any desired shape for molding by heating to about 100°C.

## Claims

1. A method for producing a fiber preform by applying a binder to a mat composed of fibers, comprising
(a) applying a binder material to a mat composed of fibers, the binder material being solid at 25°C, and then
(b) cooling said binder material to a temperature at which it is solid such that the particles adhere to the fibers and bind said fibers together to form a fiber preform, the binder material being present in an amount from about 0.25 to about 20 parts per 100 parts by weight mat
characterized in that the binder material is applied in the form of a plurality of particles of the at least partially melted tacky binder material.

2. The method of Claim 1 wherein said binder material is a thermoplastic organic polymer and said mat is composed of glass, graphite, carbon, or high flexural modulus organic polymer fibers.

3. The method of Claims 1 or 2 wherein said fibers have a diameter from about 1 to about 1000 µm (about 1 to about 1000 microns), and about 1 to about 20 parts by weight binder material are used per 100 parts by weight mat.

4. The method of Claims 1 to 3 wherein said binder material is a thermoplastic epoxy resin, and the fibers are glass fibers having an average length of about 0.6 to about 25.4 cm (about 0.25 to about 10 inches).

5. The method of claims 1 to 4 wherein the plurality of particles of a binder material which is solid at 25°C is sprayed through an energy source such that the particles are at least partially melted so as to become tacky.

6. The method of Claim 5 wherein the energy source is a flame.

7. The method of Claim 5 wherein the particles are sprayed and partially melted by means of a flame spray apparatus.

8. The method of Claims 1 to 7 wherein the mat is composed of woven or looped glass fibers.

9. The method of Claims 1 to 7 for making a fiber preform further comprising the steps of prior to or concurrently with step (a) forming said mat composed of fibers by
applying a plurality of short reinforcing fibers onto a screen to form a shaped mat;
maintaining said fibers in position on the screen during steps (a) and (b);
and subsequently to step (b)
removing the preform from the screen.

10. The method of Claim 9 wherein the steps of applying said fibers and binder material and cooling said binder material are conducted at least twice before removing the preform from the screen.

## Patentansprüche

1. Verfahren zur Herstellung einer Faservorform durch Aufbringen eines Bindemittels auf eine Matte, die aus Fasern aufgebaut ist, umfassend:
(a) Aufbringen eines Bindemittelmaterials auf eine Matte, die aus Fasern aufgebaut ist, worin das Bindemittelmaterial bei 25°C fest ist, und dann
(b) Kühlen des Bindemittelmaterials auf eine Temperatur, bei welcher es fest ist, derart, daß die Teilchen an die Fasern kleben und die Fasern aneinander binden, um eine Faservorform zu bilden, worin das Bindemittelmaterial in einer Menge von 0,25 bis 20 Teilen pro 100 Teilen bezüglich des Gewichts der Matte vorliegt,
dadurch gekennzeichnet, daß das Bindemittelmaterial in der Form einer Vielzahl von Teilchen des zumindest teilweise geschmolzenen, klebrigen Bindemittelmaterials aufgebracht wird.

2. Verfahren nach Anspruch 1, worin das Bindemittelmaterial ein thermoplastisches, organisches Polymer ist und die Matte aus Glas-, Graphit-, Kohle- oder organischen Polymerfasern mit hohem Biegemodul aufgebaut ist.

3. Verfahren nach Anspruch 1 oder 2, worin die Fasern einen Durchmesser von etwa 1 bis 1000 µm (etwa 1 bis etwa 1000 Mikrometer) aufweisen, und etwa 1 bis etwa 20 Teile bezüglich des Gewichts Bindemittelmaterial pro 100 Teilen bezüglich des Gewichts der Matte verwendet werden.

4. Verfahren nach den Ansprüchen 1 bis 3, worin das Bindemittelmaterial ein thermoplastisches Epoxyharz ist und die Fasern Glasfasern mit einer mittleren Länge von etwa 0,6 bis etwa 25,4 cm (etwa 0,25 bis etwa 10 Zoll) sind.

5. Verfahren nach den Ansprüchen 1 bis 4, worin die Vielzahl von Teilchen eines Bindemittelmaterials, das bei 25°C fest ist, durch eine Energiequelle gesprüht wird, sodaß die Teilchen zumindest teilweise geschmolzen werden, um klebrig zu werden.

6. Verfahren nach Anspruch 5, worin die Energiequelle eine Flamme ist.

7. Verfahren nach Anspruch 5, worin die Teilchen gesprüht und teilweise mittels einer Flammensprühvorrichtung geschmolzen werden.

8. Verfahren nach den Ansprüchen 1 bis 7, worin die Matte aus gewobenen oder verschlungenen Glasfasern zusammengesetzt ist.

9. Verfahren nach den Ansprüchen 1 bis 7 zum Herstellen einer Faservorform, weiterhin umfassend die Schritte, daß vor oder gleichzeitig mit Schritt (a) die aus Fasern aufgebaute Matte gebildet wird, durch
Aufbringen einer Vielzahl kurzer Verstärkungsfasern auf ein Sieb, um eine geformte Matte zu bilden;
Halten der Fasern in Position auf dem Sieb während der Schritte (a) und (b);
und nachfolgend auf Schritt (b) Entfernen der Vorform von dem Sieb.

10. Verfahren nach Anspruch 9, worin die Schritte des Aufbringens der Fasern und des Bindemittelmaterials und des Kühlens des Bindemittelmaterials mindestens zweimal vor Entfernen der Vorform von dem Sieb durchgeführt werden.

## Revendications

1. Procédé pour produire une ébauche fibreuse par application d'un liant à un mat composé de fibres, comprenant :
(a) l'application d'un matériau à un mat composé de fibres, le matériau liant étant solide à 25° C, puis
(b) le refroidissement dudit matériau liant à une température à laquelle il est solide, de manière à ce que les particules adhèrent aux fibres et lient lesdites fibres ensemble pour former une ébauche fibreuse, le matériau liant étant présent en une quantité comprise entre environ 0,25 et environ 20 parties pour 100 parties en poids de mat,
caractérisé en ce qu'on applique le matériau liant sous la forme d'une multiplicité de particules du matériau collant au moins partiellement fondu.

2. Procédé conforme à la revendication 1, dans lequel ledit matériau liant est un polymère organique thermoplastique et ledit mat est composé de fibres de verre, de graphite, de carbone ou de fibres polymères organiques à haut module de flexion.

3. Procédé conforme à la revendication 1 ou 2, dans lequel lesdites fibres ont un diamètre compris entre environ 1 et environ 1000 µm (environ 1 et environ 1000 microns), et on utilise le matériau liant en une quantité d'environ 1 à environ 20 parties en poids pour 100 parties en poids de mat.

4. Procédé conforme aux revendications 1 à 3, dans lequel ledit matériau liant est une résine époxy thermoplastique et les fibres sont des fibres de verre présentant une longueur moyenne comprise entre environ 0,6 et environ 25,4 cm (entre environ 0,25 et environ 10 pouces).

5. Procédé conforme aux revendications 1 à 4, dans lequel la multiplicité de particules d'un matériau liant, qui est solide à 25° C, est pulvérisée à travers une source d'énergie, de manière à ce que les particules soient au moins partiellement fondues pour devenir collante.

6. Procédé conforme à la revendication 5, dans lequel la source d'énergie est une flamme.

7. Procédé conforme à la revendication 5, dans lequel on pulvérise les particules et on les fait fondre partiellement au moyen d'un pistolet à flamme.

8. Procédé conforme aux revendications 1 à 7, dans lequel le mat est composé de fibres de verre tissées ou bouclées.

9. Procédé conforme aux revendications 1 à 7, pour fabriquer une ébauche fibreuse, comprenant avant ou simultanément avec l'étape (a), les étapes de formation dudit mat composé de fibres :
en appliquant une multiplicité de fibres courtes de renforcement sur un écran pour former un mat façonné ;
en maintenant lesdites fibres en position sur l'écran au cours des étapes (a) et (b) ;
et après l'étape (b), en retirant l'ébauche de l'écran.

10. Procédé conforme à la revendication 9, dans lequel les étapes d'application desdites fibres et dudit matériau liant, et de refroidissement dudit matériau liant sont menées au moins deux fois avant de retirer l'ébauche de l'écran.
